# EUROPÄISCHE PATENTSCHRIFT

(11) **EP 0 573 873 B1**
(45) Veröffentlichungstag und Bekanntmachung des Hinweises auf die Patenterteilung: **29.12.1997**
(21) Anmeldenummer: 93108756.3
(22) Anmeldetag: 01.06.1993
(51) Int. Cl.: C08G 18/50, C08G 18/66

(54) **Verfahren zur Herstellung von Urethan- und Harnstoffgruppen enthaltenden, kompakten oder zelligen Elastomeren oder Formkörpern hieraus**
Process for the preparation of urethane or urea groups-containing compact or cellular elastomers or mouldings thereof
Procédé de préparation d'élastomères compactes ou cellulaires contenant des groupes d'uréthane ou d'urée ou d'articles moulés à partir de ceux-ci

(30) Priorität: 06.06.1992 DE 4218791
(43) Veröffentlichungstag der Anmeldung: 15.12.1993
(73) Patentinhaber: BASF Aktiengesellschaft, 67063 Ludwigshafen (DE)
(72) Erfinder: Hinz, Werner, Dr., W-6710 Frankenthal (DE); Maletzko, Christian, Dr., W-6800 Mannheim 31 (DE); Becker, Johannes, Dr., W-6700 Ludwigshafen (DE); Matzke, Guenter, Dr., W-6834 Ketsch (DE)

(56) Entgegenhaltungen:
- EP-A- 0 291 770
- EP-A- 0 438 695
- DE-A- 1 917 408
- US-A- 4 465 858

## Beschreibung

Gegenstand der Erfindung ist ein Verfahren zur Herstellung von Urethan- und Harnstoffgruppen enthaltenden, kompakten oder zelligen Elastomeren, vorzugsweise Elastomer-Formkörpern, durch Umsetzung von organischen, gegebenenfalls modifizierten Polyisocyanaten (a) mit N-propoxilierten Polyoxyalkylen-polyaminen mit mindestens 50 % sekundären Aminogruppen oder Mischungen aus den genannten N-propoxilierten Polyoxyalkylen-polyaminen und Polyoxyalkylen-polyaminen mit 2 bis 4 primären Aminogruppen und Molekulargewichten von 1 000 bis 8 000 (b) und niedermolekularen alkylsubstituierten aromatischen Polyaminen, zweckmäßigerweise mit Hilfe der RIM-Technik in geschlossenen Formwerkzeugen.

Die Herstellung von Urethangruppen, Harnstoffgruppen und Urethan- und Harnstoffgruppen gebunden enthaltenden Elastomeren und Verfahren zur Herstellung von elastischen, kompakten oder zelligen Formkörpern aus derartigen Elastomeren mit Hilfe der RIM-Technik (reaction injection moulding) sind aus zahlreichen Literatur- und Patentpublikationen bekannt.

Nach Angaben der DE-B-2622951 (US-A-4 218 543) können gegebenenfalls zellige, elastische Formkörper mit einer geschlossenen Oberflächenschicht aus Polyurethan-Polyharnstoff-Elastomeren nach dem Prinzip der Reaktionsspritzguß-technik hergestellt werden. Die hierfür geeigneten Formulierungen bestehen im wesentlichen aus organischen Polyisocyanaten, Polyolen, reaktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 12 000 bis 1 800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der o-Stellungen zu den Aminogruppen substituiert ist. Derartige Systeme besitzen Startzeiten bis herab zu weniger als einer Sekunde; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-C-12 16 538 (GB-PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus Bedenken hinsichtlich einer gesundheitsschädlichen Wirkung aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE-B-26 22 951 etwas verminderter Reaktivität werden nach Angaben der EP-A-026 915 erhalten, wenn man als aromatische Diamine 3,3',5,5'-tetraalkylsubstituierte 4,4'-Diamino-diphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß. Die beschriebenen tetraalkylsubstituierten Diamino-diphenylmethane sind mit den Polyolen in den erforderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4'-Diamino-diphenylmethane für spezielle Anwendungen zu wenig reaktiv sein können.

Im Vergleich zu EP-A-026 915 etwas reaktivere Polyurethan-Polyharnstoff-Formulierungen werden in der EP-A-069 286 beschrieben. Als aromatische Diamine verwendet werden trialkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an Diaminen eine ausreichende Fließfähigkeit auf und ergeben Formkörper mit einer hohen Wärmeformbeständigkeit, die keinen progressiven Abfall der Schubmodulkurven zwischen 100 und 200°C zeigen.

Diese Verfahren weisen alle den Nachteil auf, daß der Reaktivitätsunterschied bei der Addition an Isocyanatgruppen zwischen den höhermolekularen Verbindungen mit mindestens zwei primären Hydroxylgruppen und den aromatischen Diaminen, trotz sterischer Behinderung der Aminogruppen beträchtlich ist und nur durch die Verwendung von synergistisch wirksamen Katalysatorkombinationen aus tertiären Aminen und Metallsalzen, z.B. Dibutylzinndilaurat, zur Beschleunigung der Hydroxyl-Isocyanat-Polyadditionsreaktion überwunden werden kann. Mit Metallsalzkatalysatoren hergestellte Polyurethan-Polyharnstoff-Elastomere depolymerisieren jedoch bei Temperaturen über 150°C, wobei eine länger anhaltende Hochtemperatureinwirkung zur völligen Zerstörung der mechanischen Eigenschaften des Materials führen kann.

Bekannt ist ferner die teilweise oder ausschließliche Verwendung von Polyoxyalkylen-polyaminen mit Molekulargewichten von 1100 bis 16000 zur Herstellung von elastischen Polyurethan-Polyharnstoff- oder Polyharnstoff-Elastomeren z.B. aus den EP-A-033 498 (US-A-4 269 945), EP-A-81 701, EP-A-93 861 (US-A-4 396 729), EP-A-92 672, EP-A-93 862 (US-A-4 444 910 und US-A-4 433 067), EP-A-93 334 und EP-A-93 336.

Nach Angaben der beispielsweise genannten EP-A-81 701 können höhermolekulare Polyoxyalkylen-polyamine mit an aliphatische oder aromatische Reste gebundenen Aminogruppen verwendet werden. Aliphatische Polyoxyalkylen-polyamine sind jedoch bekanntermaßen äußerst reaktiv, so daß die Verarbeitung von RIM-Formulierungen auf dieser Grundlage, z.B. aufgrund kurzer Schußzeiten und dadurch bedingtem geringem Materialaustrag, maschinentechnisch, insbesondere bei der Fertigung von voluminösen Formkörpern, zu erheblichen Problemen führen kann. Etwas langsamer als aliphatische Polyoxyalkylen-polyamine reagieren die Polyoxyalkylen-polyamine mit aromatisch gebundenen Aminogruppen. Nachteilig an diesen Verbindungen ist ihre kostspielige Herstellung in mehrstufigen Verfahren sowie insbesondere deren relativ hohe Viskosität, beispielsweise von mehr als 20 000 mPas bei 25°C, die bei der Verarbeitung von Verstärkungsmittel enthaltenden Formulierungen große Schwierigkeiten bereiten kann.

Nach Angaben der EP-A-0 298 359 (US-A-4 902 768) können Elastomere, die N-Alkylharnstoffeinheiten oder N-Alkylharnstoff- und Urethaneinheiten gebunden enthalten, hergestellt werden durch Umsetzung von Polyisocyanaten mit Kettenverlängerungsmitteln und N-Alkyl-polyoxyalkylen-polyaminen mit 2 bis 12 Kohlenstoffatomen in der Alkylgruppe. Formulierungen aus diesen Aufbaukomponenten können auch nach der RIM-Technik zu Formkörpern verarbeitet werden. Nachteilig an diesen N-Alkyl-polyoxyalkylen-polyaminen ist jedoch, daß die erhaltenen Reaktionsmischungen wegen der hohen Aminreaktivität nur schlecht fließfähig sind und dadurch große Formvolumen, insbesondere wenn die Formwerkzeuggeometrie enge Querschnitte aufweist, nur unzureichend gefüllt werden können.

Elastische Formkörper auf der Grundlage von N-substituierte Harnstoff- und Amidgruppen gebunden enthaltenden Elastomeren werden gemäß EP-A-0 438 696 (US-A-5 084 487) hergestellt aus gegebenenfalls modifizierten organischen Polyisocyanaten, polyazomethinhaltigen Polyoxyalkylen-polyamin-Mischungen, die enthalten mindestens ein Polyazomethin, mindestens ein Polyoxyalkylen-polyamin mit endständigen sekundären Aminogruppen und mindestens ein Polyoxyalkylen-polyamin mit endständigen primären Aminogruppen, und alkylsubstituierten aromatischen Polyaminen. Nach Angaben der EP-A-0 438 695 (CA-A-2 033 444) werden anstelle der polyazomethinhaltigen Polyoxyalkylen-polyamin-Mischungen N-Benzyl-polyoxyalkylenpolyamine, gegebenenfalls in Form einer Mischung mit Polyoxyalkylen-polyaminen mit primären Aminogruppen, als Aufbaukomponente zur Bildung der Weichsegmente der Elastomeren verwendet. Nach den genannten Herstellungsverfahren können elastische Formkörper mit einer guten Steifigkeit, höheren Reißdehnung und einer besseren Weiterreißfestigkeit, bzw. mit einer geringeren Sprödigkeit und erhöhten Wärmeformbeständigkeit hergestellt werden. Vorteilhaft ist auch die verbesserte Fließfähigkeit und verlängerte Gelzeit der Reaktionsmischung, so daß auch voluminöse Formwerkzeuge problemlos befüllt werden können. Nachteilig an den beschriebenen Verfahren sind lediglich die mehrstufige, kostspielige Herstellung der Polyazomethine und der sekundären Polyoxyalkylen-polyamine hieraus.

Bekannt ist ferner die Verwendung von Isocyanatgruppen enthaltenden Prepolymeren und Quasiprepolymeren mit NCO-Gehalten zwischen 9 und 31 Gew.%, die unter Verwendung von gegebenenfalls modifiziertem 4,4'-Diphenylmethan-diisocyanat hergestellt wurden, aus den US-Patentschriften 4 048 105, 4 102 833 und 4 374 210 in Polyurethan-Systemen und die Herstellung von alkoxylierten Polyoxyalkylen-polyaminen. Nach Angaben der DE-B-1 917 408 und DE-A-1 966 059 sowie der DE-A-1 966 058 (CA-A-914 850) können Polyoxypropylen-diamine oder -triamine unter inerten Bedingungen bei 125°C bis 170°C mit Ethylen- oder Propylenoxid umgesetzt und die auf diese Weise erhaltenen Polyoxyalkylen-polyamin-Alkylenoxidaddukte mit Polyisocyanaten zu Polyurethan-Schaumstoffen weiterverarbeitet werden.

Alkoxylierte Polyoxyalkylen-polyamine mit einem Gehalt an tertiären Aminogruppen von mehr oder weniger als 90 % werden nach Angaben der US-A-4 465 858 und US-A-4 479 010 hergestellt durch Umsetzung von Polyoxyalkylen-polyaminen mit Alkylenoxiden in Gegenwart von 5 bis 15 Gew.-% Wasser, bezogen auf das Polyoxyalkylen-polyamin, bei 75 bis 85°C und Nachbehandlung der Reaktionsmischung bei 75 bis 135°C. Die erhaltenen alkoxylierten Polyoxyalkylen-polyamine eignen sich zur Herstellung von flexiblen Polyurethan-Schaumstoffen, als tertiäre Aminogruppen aufweisende Polyurethan-Katalysatoren oder als Vernetzungsmittel für PolyurethanSchaumstoffe, -Elastomere und -Klebstoffe.

Durch die Auswahl geeigneter höhermolekularer Verbindungen mit mindestens zwei reaktiven Wasserstoffatomen, wie z.B. Polyether- und/oder Polyester-polyolen, Polyoxyalkylen-polyaminen mit an aliphatische oder aromatische Reste gebundenen primären Aminogruppen, oder insbesondere entsprechend substituierter aromatischer primärer Diamine als Kettenverlängerungsmittel sowie von speziellen Katalysatoren oder Katalysatorsystemen versuchte man die RIM-Formulierungen den gegebenen Erfordernissen, wie z.B. Volumen und Geometrie des Formwerkzeugs, anzupassen. Nachteilig an dieser Methode ist jedoch, daß durch die eingesetzten Ausgangsverbindungen nicht nur die Reaktivität der RIM-Formulierungen, sondern auch die mechanischen Eigenschaften der erhaltenen Formkörper beeinflußt werden, so daß Formkörper mit bestimmten Raumformen und größeren Abmessungen teilweise nicht oder nur mit verminderten mechanischen Eigenschaften hergestellt werden können, da die Reaktionsmischungen beispielsweise nicht ausreichend fließfähig sind oder in den erforderlichen Mengen nicht in das Formwerkzeug eingebracht werden können.

Die Aufgabe der vorliegenden Erfindung bestand darin, aus gut zugänglichen und daher preisgünstigen Ausgangsstoffen, insbesondere höhermolekularen Polyaminen geeigneter Reaktivität, Elastomere, vorzugsweise Elastomer-Formkörper, zweckmäßigerweise mit Hilfe der RIM-Technik, herzustellen, die in ihren mechanischen Eigenschaften zumindest vergleichbar sind mit Polyurethan-Polyharnstoff- oder Polyharnstoff-Elastomeren, jedoch eine verminderte Sprödigkeit, insbesondere Kaltsprödigkeit, besitzen. Die Reaktionsmischungen sollten gute Fließeigenschaften zeigen und eine größere Verarbeitungsbreite zulassen, so daß bei der Formkörperherstellung eine deutliche Verminderung der Ausschußquote erzielt werden kann.

Diese Aufgabe konnte überraschenderweise gelöst werden durch die Verwendung von sekundären, N-propoxilierten Polyoxyalkylen-polyaminen als höhermolekulare Verbindung mit reaktiven Wasserstoffatomen.

Gegenstand der Erfindung ist somit ein Verfahren zur Herstellung von Urethan- und Harnstoffgruppen enthaltenden Elastomeren durch Umsetzung von
a) mindestens einem organischen und/oder modifizierten organischen Polyisocyanat mit
b) mindestens einem sekundären Polyoxyalkylen-polyamin und
c) mindestens einem alkylsubstituierten aromatischen Polyamin mit einem Molekulargewicht bis 500
   in Gegenwart oder Abwesenheit von
d) Katalysatoren,
das dadurch gekennzeichnet ist, daß man als sekundäre Polyoxyalkylen-polyamine N-propoxilierte Polyoxyalkylen-polyamine mit mindestens 50 % sekundäre Aminogruppen verwendet, die durch Umsetzung von Polyoxyalkylen-di- und/oder -triaminen mit mindestens einem Mol 1,2-Propylenoxid pro -NH₂-Gruppe in Abwesenheit von Wasser hergestellt wurden.

Die erfindungsgemäß hergestellten Urethan- und Harnstoffgruppen enthaltenden Elastomeren, vorzugsweise ElastomerFormkörper, besitzen eine verminderte Sprödigkeit, die insbesondere bei tieferen Temperaturen eine deutliche Verbesserung darstellt. Besonders hervorzuheben ist jedoch die hervorragende Verarbeitbarkeit der Reaktionsmischung und ihre gute Fließfähigkeit.

Zur Herstellung der erfindungsgemäß verwendbaren N-propoxilierten Polyoxyalkylen-polamine mit mindestens 50 % sekundären Aminogruppen und den nach dem erfindungsgemäßen Verfahren zur Herstellung der Urethan- und Harnstoffgruppen gebunden enthaltenden Elastomeren verwendbaren anderen Ausgangsstoffen sowie den hieraus bestehenden Formkörpern ist im einzelnen folgendes auszuführen:
a) Als organische Polyisocyanate kommen die an sich bekannten aliphatischen, cycloaliphatischen und vorzugsweise aromatischen mehrwertigen Isocyanate in Frage. Im einzelnen seien beispielhaft genannt: 1,6-Hexamethylendiisocyanat, 1-Isocyanato-3,5,5-trimethyl-3-isocyanatomethyl-cyclohexan, 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, Mischungen aus 4,4'-, 2,2'- und 2,4'-Dicyclohexylmethan-diisocyanaten und Polymethylen-polycyclohexylen-polyisocyanaten, 2,4- und 2,6-Toluylen-diisocyanat und die entsprechenden Isomerengemische, 4,4'-, 2,4'- und 2,2'-Diphenylmethandiisocyanat und die entsprechenden Isomerengemische, Mischungen aus 4,4'-, 2,4'- und 2,2'-Diphenylmethandiisocyanaten und Polyphenyl-polymethylen-polyisocyanaten (Roh-MDI) und Mischungen aus Roh-MDI und Toluylen-diisocyanaten.
   Häufig werden auch sogenannte modifizierte mehrwertige Isocyanate, d.h. Produkte, die durch chemische Umsetzung obiger Di- und/oder Polyisocyanate erhalten werden, verwendet. Beispielhaft genannt seien Ester-, Harnstoff-, Biuret-, Allophanat- und vorzugsweise Carbodiimid-, Isocyanurat- und/oder Urethangruppen enthaltende Di-und/oder Polyisocyanate. Im einzelnen kommen beispielsweise in Betracht: Urethangruppen enthaltende aromatische Polyisocyanate mit NCO-Gehalten von 33,6 bis 8 Gew.%, vorzugsweise von 31 bis 21 Gew.%, beispielsweise mit niedermolekularen Diolen, Triolen, Oxyalkylenglykolen, Dioxyalkylenglykolen oder Polyoxyalkylen-glykolen mit Molekulargewichten bis 800 modifiziertes 4,4'-Diphenylmethan-diisocyanat oder Toluylendiisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylenglykole. Geeignet sind auch NCO-Gruppen enthaltende Prepolymere mit NCO-Gehalten von 25 bis 8 Gew.%, vorzugsweise von 21 bis 14 Gew.%. Bewährt haben sich ferner flüssige Carbodiimidgruppen und/oder Isocyanuratringe enthaltende Polyisocyanate mit NCO-Gehalten von 33,6 bis 8 Gew.-%, vorzugsweise 31 bis 21 Gew.%, z.B. auf Basis von 4,4'-, 2,4'- und/oder 2,2'-Diphenylmethan-diisocyanat und/oder 2,4- und/oder 2,6-Toluylen-diisocyanat und vorzugsweise 2,4- und 2,6-Toluylen-diisocyanat sowie die entsprechenden Isomerengemische, 4,4'-, 2,4'- und 2,2'-Diphenylmethan-diisocyanat sowie die entsprechenden Isomerengemische z.B. aus 4,4'- und 2,4'-Diphenylmethandiisocyanaten, Roh-MDI und Gemische aus Toluylen-diisocyanaten und Roh-MDI.
   Insbesondere kommen jedoch zur Anwendung: (i) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 33,6 bis 8 Gew.%, (ii) NCO-Gruppen enthaltende Prepolymere mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6000 mit 4,4'-Diphenylmethan-diisocyanat oder einer Mischung aus 4,4'- und 2,4'-Diphenylmethandiisocyanaten und Mischungen aus (i) und (ii).
   Zur Herstellung der NCO-Gruppen enthaltenden Prepolymeren eignen sich, wie bereits dargelegt wurde, Polyoxyalkylen-polyole mit einer Funktionalität von 2 bis 4, vorzugsweise 2 bis 3 und einem Molekulargewicht von 600 bis 6000, vorzugsweise von 2000 bis 4500. Analoge Polyoxyalkylen-polyole mit Molekulargewichten von ungefähr 1 000 bis 8 000 können eingesetzt werden zur Polyoxyalkylen-polyaminherstellung, die ihrerseits als Ausgangsstoffe zur Herstellung der erfindungsgemäß geeigneten N-propoxilierten Polyoxyalkylen-polyamine oder in Verbindung mit diesen zur Herstellung der Urethan- und Harnstoffgruppen enthaltenden Elastomeren Verwendung finden können. Derartige Polyoxyalkylen-polyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 4, vorzugsweise 2 oder 3 reaktive Wasserstoffatome gebunden enthält, hergestellt werden.
   Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4-, 3,4- und 2,6-Toluylendiamin und 4,4'-, 2,4'- und 2,2'-Diamino-diphenylmethan.
   Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin sowie Ammoniak. Vorzugsweise verwendet werden mehrwertige, insbesondere zwei- und/oder dreiwertige Alkohole und Dialkylen-glykole, wie z.B. Ethandiol, Propandiol-1,2 und -1,3, Butandiol-1,4, Hexandiol-1,6, Glycerin, Trimethylol-propan und Pentaerythrit sowie Diethylenglykol und Dipropylenglykol,.
   Die Polyoxyalkylen-polyole können einzeln oder in Form von Mischungen verwendet werden.
b) Als sekundäre Polyoxyalkylen-polyamine (b) finden erfindungsgemäß N-propoxilierte, Polyoxyalkylen-polyamine mit mindestens 50 %, vorzugsweise mindestens 55 % und insbesondere mindestens 70 % sekundären Aminogruppen oder Mischungen aus derartigen sekundären N-propoxilierten Polyoxyalkylen-polyaminen und Polyoxyalkylen-polyaminen mit 2 bis 4, vorzugsweise 2 bis 3 primären Aminogruppen und Molekulargewichten von 1 000 bis 8 000, vorzugsweise von 1000 bis 4000 Verwendung. In Betracht kommen vorteilhafterweise N-propoxilierte Polyoxyalkylen-polyamine mit 2 bis 4, vorzugsweise 2 und/oder 3 Aminogruppen und einem Molekulargewicht von 1000 bis 5000, vorzugsweise von 1 000 bis 3 000, die als Polyoxyalkylenreste zweckmäßigerweise Polyoxyethylen-, Polyoxypropylen-, Polyoxytetramethylen-, Polyoxytetramethylenpolyoxypropylen- und/oder -polyoxyethylen-, vorzugsweise Polyoxypropylen-polyoxyethylen- und insbesondere Polyoxypropylenrest gebunden haben.
   Die erfindungsgemäß verwendbaren N-propoxilierten Polyoxyalkylenpolyamine enthalten vorzugsweise
   - 0 bis 30 %,: insbesondere 2 bis 20 % primäre Aminogruppen,
   - 50 bis 100 %,: insbesondere 55 bis 90 % N-2-Hydroxypropylaminogruppen und
   - 0 bis 30 %,: insbesondere 8 bis 20 % N,N-Di-(2hydroxypropyl)-aminogruppen.

   Derartige N-propoxilierte Polyoxyalkylen-polyamine mit mindestens 50 % sekundären Aminogruppen können beispielsweise hergestellt werden durch Umsetzung von Polyoxyalkylen-polyaminen, vorzugsweise Polyoxyalkylen-diund/oder -triaminen mit mindestens einem, vorzugsweise einem bis 2 Molen 1,2-Propylenoxid pro -NH₂-Gruppe in Abwesenheit von Wasser und Katalysatoren bei einer Temperatur im Bereich von 90 bis 120°C, vorzugsweise von 100 bis 110°C und unter einem Druck von 1 bis 8 bar, vorzugsweise 2 bis 6 bar und gegebenenfalls Abtrennung des überschüssigen, nicht umgesetzten 1,2-Propylenoxids oder durch Umsetzung der vorgenannten Polyoxyalkylen-polyamine, vorzugsweise Polyoxyalkylen-di- und/oder -triamine mit 1,0 bis 1,2 Molen, vorzugsweise einem Mol 1,2-Propylenoxid pro -NH₂-Gruppe in Gegenwart oder Abwesenheit von Katalysatoren unter den vorgenannten Temperatur- und Druckbedingungen. Die N-propoxilierten Polyoxyalkylen-polyamine werden, bevorzugt hergestellt aus Polyoxyalkylen-di- und/oder -triaminen mit einem Molekulargewicht von 1 000 bis 3 000.
   Die zur N-2-Hydroxypropyl-polyoxyalkylen-polyaminherstellung vorzugsweise zur Anwendung kommenden Polyoxyalkylen-polyamine mit an aliphatische Reste gebundenen Aminogruppen können nach bekannten Verfahren, beispielsweise durch Cyanoalkylierung der beschriebenen Polyoxyalkylen-polyole und anschließender Hydrierung des gebildeten Nitrils (US-A-3 267 050) oder durch Aminierung von Polyoxyalkylen-polyolen mit Ammoniak in Gegenwart von Wasserstoff und Katalysatoren (DE-A-12 15 373) hergestellt werden.
   Geeignete Polyoxyalkylen-polyamine mit an aromatische Reste gebundenen Aminogruppen können beispielsweise hergestellt werden durch Umsetzung der oben beschriebenen Polyoxyalkylen-polyole mit aromatischen Polyisocyanaten im Verhältnis von NCO-:OH-Gruppen von mindestens 2 und anschließender Hydrolyse der erhaltenen aromatische NCO-Gruppen aufweisenden Prepolymeren zu Polyaminen analog den Verfahren der DE-A-29 48 419, DE-A-30 39 600, EP-A-84 141, EP-A-79 512, EP-A-97 290, EP-A-97 298, EP-A-97 299, EP-A-99 537, EP-A-113 027, EP-A-113 020 oder EP-A-154 768.
   Die Polyoxyalkylen-polyamine können als Einzelverbindungen oder in Form von Mischungen aus Produkten mit unterschiedlichen Molekulargewichten und Funktionalitäten verwendet werden. Als Polyoxyalkylen-polyamine verwendbar sind ferner Mischungen aus Polyoxyalkylen-polyolen und Polyoxyalkylen-polyaminen und/oder teilweise aminierten Polyoxyalkylen-polyolen mit der Maßgabe, daß mindestens 50 %, vorzugsweise mindestens 64 % und insbesondere mehr als 90 % der reaktiven Endgruppen Aminogruppen sind und diese zweckmäßigerweise zu mindestens 85 %, vorzugsweise zu mehr als 90 % aus primären Aminogruppen bestehen.
   Wie bereits ausgeführt wurde, können zur Herstellung der elastischen, kompakten oder zelligen Formkörper auf der Grundlage der Urethan- und Harnstoffgruppen enthaltenden Elastomeren auch Mischungen verwendet werden aus den erfindungsgemäß geeigneten N-propoxilierten Polyoxyalkylen-polyaminen mit mindestens 50 % sekundären Aminogruppen (b) und den oben beschriebenen Polyoxyalkylen-polyaminen (bi). Derartige Mischungen können beispielsweise erhalten werden durch Mischen von vorab hergestellten N-propoxilierten Polyoxyalkylen-polyaminen (b) mit Polyoxyalkylen-polyaminen (bi). Nach einer anderen Verfahrensvariante können die eingesetzten Polyoxyalkylen-polyamine mit 2 bis 4 primären Aminogruppen mit einer unterschüssigen Menge 1,2-Propylenoxid propoxiliert werden. Die erhaltenen Mischungen aus (b) und (bi) besitzen zweckmäßigerweise mindestens 50 % sekundäre Aminogruppen.
c) Als alkylsubstituierte aromatische Polyamine mit Molekulargewichten bis 500, vorzugsweise von 122 bis 400, werden zweckmäßigerweise primäre aromatische Diamine verwendet, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den N-propoxylierten Polyoxyalkylen-polyaminen (b) oder den Mischungen aus N-propoxylierten Polyoxyalkylen-polyaminen (b) und Polyoxyalkylen-polyaminen mit primären Aminogruppen (bi) unter den Verarbeitungsbedingungen zumindest teilweise, vorzugsweise jedoch vollständig mischbar sind. Bewährt haben sich beispielsweise alkylsubstituierte meta-Phenylendiamine der Formeln 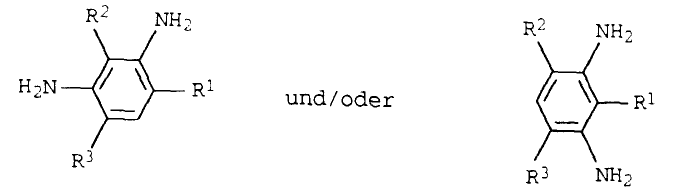 in denen R³ und R² gleich oder verschieden sind und einen Methyl-, Ethyl-, Propyl- oder Isopropylrest bedeuten und R¹ ein linearer oder verzweigter Alkylrest mit 1 bis 10, vorzugsweise 1 bis 6 Kohlenstoffatomen ist. Gut bewährt haben sich auch verzweigte Alkylreste R¹ mit 4 bis 6 Kohlenstoffatomen, bei denen die Verzweigungsstelle am C₁-Kohlenstoffatom sitzt. Als Reste R¹ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl-, Cyclohexyl-, 1-Methyl-n-propyl-, tert.-Butyl-, 1-Ethyl-n-propyl-, 1-Methyl-n-butyl-butyl- und 1,1-Dimethyl-n-propylrest.
   Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2- (1-Methyl-n-butyl)-4,6-dimethylphenylendiamin-1,3. Vorzugsweise verwendet werden 1-Methyl-3,5-diethyl-2,4- und/oder -2,6-phenylendiamine, 2,4-Dimethyl-6-tert.-butyl-, 2,4-Dimethyl-6-isooctyl-und 2,4-Dimethyl-6-cyclo-hexyl-phenylendiamin-1,3.
   Geeignet sind ferner 3,3'-di- und/oder 3,3',5,5'-tetra-n-alkylsubstituierte 4,4'-Diamino-diphenylmethane wie z.B. 3,3'-Dimethyl-, 3,3'-Diethyl-, 3,3'-Di-n-propyl-, 3,3',5,5'-Tetramethyl-, 3,3',5,5'-Tetraethyl- und 3,3',5,5'-Tetra-n-propyl-4,4'-diamino-diphenylmethan.
   Als alkylsubstituierte 4,4'-Diamino-diphenylmethane finden vorzugsweise solche der Formel 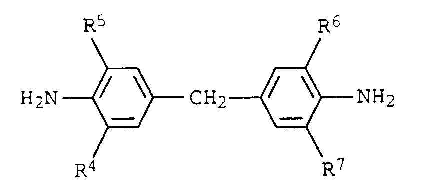
   Verwendung, in der R⁴, R⁵, R⁶ und R⁷ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln 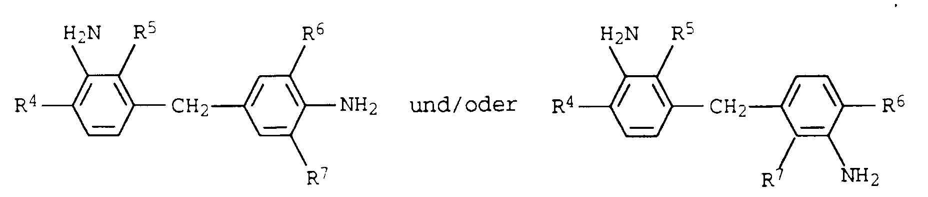 verwendet werden, wobei R⁴, R⁵, R⁶ und R⁷ die oben genannte Bedeutung haben.
   Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Diethyl-5,5'-diisopropyl-, 3,3'-Di-methyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5'-Dimethyl-3',5-di-sek.-bu-tyl-, 3,5-Diethyl-3',5'-di-sek.-butyl-, 4,4'-diamino-diphenylmethan, 3-Methyl-3',5,5'-triisopropyl-, 3-Ethyl-3',5,5'-triisopropyl-, 3-Methyl-3'-ethyl- 5,5'-diisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diamino-diphenylmethan. Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane können einzeln oder in Form von Mischungen eingesetzt werden.
   Zur Herstellung der Urethan- und Harnstoffgruppen gebunden enthaltenden Elastomeren und Formkörper hieraus nach dem erfindungsgemäßen Verfahren werden vorzugsweise die technisch gut zugänglichen 1,3,5-Triethyl-2,4-phenylendiamin, l-Methyl-3,5-diethyl-2,4-phenylendiamin, Mischungen aus 1-Methyl-3,5-diethyl-2,4- und -2,6-pheny-lendiaminen, sogenanntes DETDA, Isomerengemische aus 3,3'-di- oder 3,3',5,5'-tetraalkylsubstituierten 4,4'-Diamino-diphenylmethanen mit 1 bis 4 C-Atomen im Alkylrest, insbesondere Methyl-, Ethyl- und Isopropylreste gebunden enthaltende 3,3',5,5'-tetralkylsubstituierte 4,4'-Diamino-diphenylmethane sowie Gemische aus den genannten tetraalkylsubstituierten 4,4'-Diamino-diphenylmethanen und DETDA verwendet.
   Zur Erzielung spezieller mechanischer Eigenschaften kann es auch zweckmäßig sein, die vorgenannten alkylsubstituierten aromatischen Polyamine (c) in Gemisch mit niedermolekularen mehrwertigen Alkoholen, vorzugsweise zwei- und/oder dreiwertigen Alkoholen oder Etherglykolen zu verwenden. Als derartige mehrwertige Alkohole und Etherglykole seien beispielsweise genannt: Alkandiole mit vorzugsweise 2 bis 6 Kohlenstoffatomen, insbesondere Ethan-, 1,4-Butan- und 1,6-Hexandiol, Glycerin, Trimethylolpropan, Diethylen-, Dipropylen-glykol oder Mischungen aus mindestens zwei der genannten Verbindungen. Nachteilig an dieser Verfahrensweise ist, daß die Reaktion aufgrund der unterschiedlichen Reaktivität der sekundären und gegebenenfalls primären Aminogruppen und der Hydroxylgruppen einer sorgfältigen Katalyse bedarf. Sofern niedermolekulare mehrwertige Alkohole überhaupt Anwendung finden, hat es sich als zweckmäßig erwiesen maximal 50 Gew.-%, vorzugsweise weniger als 20 Gew.-%, bezogen auf das Gewicht der alkylsubstituierten aromatischen Polyamine (c) zu verwenden.
   Zur Herstellung der Urethan- und Harnstoffgruppen enthaltenden Elastomeren werden die organischen Polyisocyanate und/oder modifizierten Polyisocyanatmischungen (a), N-propoxylierten Polyoxyalkylen-polyamine mit mindestens 50 % sekundären Aminogruppen (b) und alkylsubstituierten primären aromatische Polyamine (c) zweckmäßigerweise in solchen Mengen zur Reaktion gebracht, daß das Äquivalenz-Verhältnis von NCO-Gruppen der Komponente (a) zur Summe der reaktiven Wasserstoffatome der Komponenten (b) und (c) 0,85 bis 1,25 : 1, vorzugsweise 0,95 bis 1,15 : 1 und insbesondere 0,98 bis 1,10 : 1 beträgt und das Verhältnis von N-propoxylierten Aminogruppen oder der Summe aus N-propoxylierten Aminogruppen und primären Aminogruppen der Komponente (b) und gegebenenfalls (bi) zu primären aromatischen Aminogruppen der Komponente (c) 90 : 10 bis 10 : 90, vorzugsweise 40 : 60 bis 15 : 85 ist. Sofern die Reaktionsmischung zusätzlich Hydroxylgruppen enthält, sind diese den Aminogruppen hinsichtlich der Äquivalenzverhältnisse gleich.
   Die Urethan- und Harnstoffgruppen gebunden enthaltenden Elastomeren werden vorzugsweise in Abwesenheit von Katalysatoren hergestellt. Sofern jedoch Katalysatoren Anwendung finden, werden insbesondere stark basische Amine eingesetzt, wobei zur Erzielung von wärmebeständigen Formkörpern, die der on-line-Lackierung unterworfen werden können, zweckmäßigerweise auf eine eventuelle Mitverwendung von synergistisch wirkenden organischen Metallverbindungen z.B. organischen Zinnverbindungen, vollständig verzichtet wird. Als geeignete Katalysatoren seien beispielsweise genannt: Amidine, wie z.B. 2,3-Dimethyl-3,4,5,6-tetrahydropyrimidin und tertiäre Amine, wie z.B. Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, N,N,N",N",N"-Pentamethyl-di-ethylentriamin, N,N,N',N'-Tetramethyl-diaminoethylether, N,N,N',N'-Tetramethyl-4,4'-diamino-dicyclohexyl-methan, Bis-(dimethyl-aminopropyl)-harnstoff, Dimethylpiperazin, 1,2-Dimethylimidazol, 1-Aza-bicyclo-(3,3,0)- octan und vorzugsweise 1,4-Diaza-bicyclo-(2,2,2)-octan.
   Als Katalysatoren kommen ferner in Betracht: Tris-(di-alkylaminoalkyl)-s-hexahydrotriazine, insbesondere Tris-(N,N-dimethylaminopropyl)-s-hexahydrotriazin, Tetralkylammoniumhydroxide, wie z.B. Tetramethyl-ammoniumhydroxid, Alkalihydroxide, wie z.B. Natriumhydroxid und Alkalialkoholate, wie z.B. Natriummethylat und Kaliumisopropylat sowie Alkalisalze von langkettigen Fettsäuren mit 10 bis 20 C-Atomen und gegebenenfalls seitenständigen OH-Gruppen. Verwendet werden üblicherweise 0,001 bis 5 Gew.%, vorzugsweise 0,05 bis 2 Gew.% Katalysator, bezogen auf das Gewicht der Komponente (b).
   Zur Herstellung von elastischen Formkörpern auf Basis der erfindungsgemäßen Urethan- und Harnstoffgruppen enthaltenden Elastomeren können der Reaktionsmischung aus den Komponenten (a) bis (c) sowie gegebenenfalls (d) gegebenenfalls Treibmittel (e) zur Erzielung zelliger Formkörper sowie gegebenenfalls Hilfsmittel (f) und/oder Zusatzstoffe (g) einverleibt werden.
e) Als Treibmittel zur Herstellung von zelligen Formkörpern eignet sich z.B. Wasser, das mit Isocyanatgruppen unter Bildung von Kohlendioxid reagiert. Die Wassermengen, die zweckmäßigerweise verwendet werden können, betragen üblicherweise bis zu 5 Gew.-%, vorzugsweise 0,1 bis 1,0 und insbesondere 0,2 bis 0,4 Gew.%, bezogen auf das Gewicht der Komponenten (b) und (c).
   Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoff, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton und fluorierte und/oder perfluorierte, tertiäre Alkylamine, wie z.B. Perfluor-dimethyl-isopropylamin. Auch Gemische dieser niedrigsiedenden Flüssigkeiten untereinander und/oder mit anderen substituierten oder unsubstituierten Kohlenwasserstoffen können verwendet werden.
   Die zweckmäßigste Menge an niedrigsiedender Flüssigkeit zur Herstellung derartiger zellhaltiger, elastischer Formkörpern hängt ab von der Dichte, die man erreichen will sowie gegebenenfalls von der Mitverwendung von Wasser. Im allgemeinen liefern Mengen von 1 bis 15 Gew.%, vorzugsweise 2 bis 11 Gew.%, bezogen auf das Gewicht der Komponenten (b) und (c), zufriedenstellende Ergebnisse.
f) und g) Als geeignete Hilfsmittel (f) und/oder Zusatzstoffe (g) seien beispielhaft genannt: oberflächenaktive Substanzen, Schaumstabilisatoren, Zellregler, Füllstoffe, Verstärkungsmittel, Flammschutzmittel, äußere und/oder innere Trennmittel, Farbstoffe, Pigmente, Hydrolyseschutzmittel, fungistatisch und bakteriostatisch wirkende Substanzen.
   Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponenten (b) und (c) angewandt.
   Als Füllstoffe, insbesondere verstärkend wirkende Füllstoffe sind die an sich bekannten üblichen organischen und anorganischen Füllstoffe und Verstärkungsmittel zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum und Zeolithe, Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit und insbesondere Glasfasern verschiedener Länge, die gegebenenfalls geschlichtet sein können. Als organische Füllstoffe kommen beispielsweise in Betracht: Ruß, Kohlefasern, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyoxyalkylen-polyolen -polyolen analog den Angaben der deutschen Patentschriften 11 11 394, 12 22 669, (US 3 304 273, 3 383 351, 3 523 093), 11 52 536 (GB 1 040 452) und 11 52 537 (GB 987 618) hergestellt und danach aminiert werden sowie Filler-polyoxyalkylenpolyamine, bei denen wäßrige Polymerdispersionen in Polyoxyalkylen-polyamin-dispersionen übergeführt werden.
   Die anorganischen und organischen Füllstoffe können einzeln oder als Gemische verwendet werden. Vorzugsweise Anwendung finden ungeschlichtete oder geschlichtete Kurzglasfasern mit Längen kleiner als 0,4 mm, vorzugsweise kleiner als 0,2 mm.
   Die anorganischen und/oder organischen Füllstoffe und/oder Verstärkungsmittel werden der Reaktionsmischung vorteilhafterweise in Mengen von 0,5 bis 35 Gew.%, vorzugsweise 3 bis 20 Gew.%, bezogen auf das Gewicht der Komponenten (a) bis (c), einverleibt.
   Geeignete Flammschutzmittel sind beispielsweise Trikresylphosphat, Tris-2-chlorethylphosphat, Tris-chlorpropylphosphat und Tris-2,3-dibrompropylphosphat.
   Außer den bereits genannten halogensubstituierten Phosphaten können auch anorganische Flammschutzmittel, wie z.B. Aluminiumoxidhydrat, Antimontrioxid, Arsenoxid, Ammoniumpolyphosphat und Calciumsulfat oder Melamin, Blähgraphit oder Mischungen davon, beispielsweise Mischungen aus Melamin, Blähgraphit und/oder Ammoniumpolyphosphat, zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponenten (b) und (c) zu verwenden.
   Nähere Angaben über die oben genannten anderen üblichen Hilfsmittel und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Die elastischen, kompakten Formkörper auf Basis der erfindungsgemäßen Urethan- und Harnstoffgruppen enthaltenden Elastomeren werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Zur Herstellung der zelligen Formkörper wird die Reaktion insbesondere unter Verdichtung in einem geschlossenen Formwerkzeug durchgeführt. Die Reaktionsspritzguß-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, Marz/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Aufbaukomponenten (b) und (c) und gegebenenfalls (d) bis (g) in der Komponente (A) zu vereinigen und als Komponente (B) die organischen Polyisocyanate oder modifizierte Polyisocyanatmischungen zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen gegebenenfalls zelligen Formkörper eine Dichte von 250 bis 1400 kg/m³ besitzen, wobei die kompakten Formkörper eine Dichte vorzugsweise von 1000 bis 1400 kg/m³, und insbesondere von 1000 bis 1200 kg/m³, die zelligen und mikrozellularen Formkörper vorzugsweise eine Dichte von 400 bis 1100 kg/m³, z.B. für Schuhsohlen von 450 bis 750 kg/m³, insbesondere von 550 bis 650 kg/m³ und für Verkleidungselemente von 700 bis 1200 kg/m³, insbesondere von 950 bis 1150 kg/m³ aufweisen. Die Ausgangskomponenten werden mit einer Temperatur von 15 bis 80°C, vorzugsweise von 30 bis 65°C in das Formwerkzeug eingebracht. Die Formwerkzeugtemperatur beträgt zweckmäßigerweise 20 bis 110°C, vorzugsweise 35 bis 95°C und insbesondere 35 bis 75°C. Die Verdichtungsgrade zur Herstellung der mikrozellularen oder zelligen Formkörper liegen zwischen 1,1 und 8, vorzugsweise zwischen 2 und 6.

Obgleich die erfindungsgemäß hergestellten Elastomer-Formkörper trennfreundlich sind, kann es zur Verbesserung der Entformung vorteilhaft sein, die Formwerkzeuginnenflächen zumindest zu Beginn einer Produktionsreihe mit üblichen äußeren Formtrennmitteln, beispielsweise auf Wachs- oder Silikonbasis oder insbesondere mit wäßrigen Seifenlösungen, zu beschichten. Insbesondere bewährt haben sich jedoch und daher vorzugsweise verwendet werden innere Formtrennmittel, wie sie beispielsweise beschrieben werden in der EP-A-153 639, EP-A-180 749 (AU 85/47 498), EP-A-173 888 (US 4 519 965), WO 84/03288 (EP-A-119 471) und WO 86/01215. Die Formstandzeiten betragen in Abhängigkeit von der Größe und Geometrie des Formteils durchschnittlich 3 bis 60 Sekunden.

Die nach dem erfindungsgemäßen Verfahren erhältlichen kompakten Formkörper finden insbesondere Verwendung in der Kraftfahrzeug- und Flugzeugindustrie, beispielsweise als Stoßstangenabdeckungen, Rammschutzleisten, Karosserieteile, wie z.B. Regenrinnen, Kotflügel, Spoiler, Radkastenverbreiterungen sowie für andere technische Gehäuseteile und Laufrollen. Die zelligen Formkörper eignen sich für Schuhsohlen, Armlehnen, Kopfstützen, Sonnenblenden, Sicherheitsabdeckungen in Fahrzeugkabinen, sowie als Motorrad-, Traktor- oder Fahrradsattel, Sitzkissen und Deckschichten in Verbundkörpern.

### Beispiele

### Beispiel 1

Herstellung einer N,N'-Di- (2-hydroxylpropyl)-polyoxypropylendiamin-Mischung

In einem 10-1-Druckautoklaven wurden zur Entfernung der flüchtigen Bestandteile 7 480 g eines Polyoxypropylen-diamins der Struktur 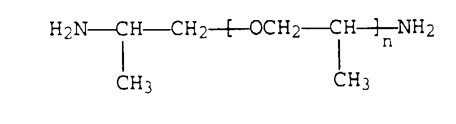 mit einem mittleren Molekulargewicht von 2 000 (Jeffamine® D 2 000 der Texaco AG) eine Stunde lang bei einer Temperatur von 105°C und unter einem verminderten Druck von 1,33 mbar behandelt.

Anschließend wurden in einem Zeitraum von einer Stunde bei 105°C 520 g 1,2-Propylenoxid zudosiert. Nach einer Reaktionszeit von 20 Stunden bei 105°C wurde das nicht umgesetzte 1,2-Propylenoxid unter vermindertem Druck bei 33 mbar in 30 min und anschließend bei 1,33 mbar in 60 Minuten vollständig abgetrennt. Das auf diese Weise hergestellte N-propoxilierte Polyoxypropylen-diamin besaß eine Hydroxylzahl von 87, eine Viskosität von 367 mPas bei 25°C (Ubbelohde), Gehalte an primären Aminogruppen von 6 %, N-2-Hydroxypropylaminogruppen von 84 % und N,N-Di-(2-hydroxypropyl-amingruppen von 10 %, einen Restwassergehalt von 0,075 Gew.-% und einen pH-Wert von 11,7.

Als Vergleichssubstanzen wurden zur Herstellung der Formkörper verwendet:

Polyoxypropylen-diamin (I) mit einem mittleren Molekulargewicht von 2 000 (Jeffamine® D 2000 der Texaco AG) und N,N'-Dibenzyl-polyoxypropylen-diamin (II)

Das N,N'-Dibenzyl-polyoxypropylen-diamin (II) wurde über N,N'-Polyoxypropylen-dibenzylimin nach folgender Methode hergestellt:
a) Herstellung von N,N'-Polyoxypropylen-dibenzylimin
   6000 Gew.-Teile eines Polyoxypropylen-diamins der Struktur 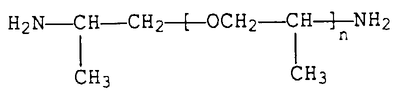 und einem mittleren Molekulargewicht von 2000 (Jeffamin® D 2000) wurden in einem 10 Liter Dreihalskolben, ausgerüstet mit Rührer, Tropftrichter und Destilliervorrichtung auf 50°C temperiert. Unter intensivem Rührers ließ man hierzu
   1300 Gew.-Teile einer Lösung, die bestand aus
   650 Gew.-Teilen Benzaldehyd in
   650 Gew.-Teilen Cyclohexan
   innerhalb einer Stunde zutropfen und rührte noch 15 Minuten bei 50°C nach.
   Die flüchtigen Bestandteile der Reaktionsmischung wurden nun bei einer Sumpftemperatur bis 100°C zuerst bei Normaldruck und anschließend unter stetiger Druckreduzierung bis auf 2 bis 3 mbar abgetrennt. Man erhielt als Rückstand 6500 Gew.-Teile N,N'-Polyoxypropylen-dibenzylimin, das ohne weitere Reinigung hydriert wurde.
b) Herstellung von N,N'-Dibenzyl-polyoxypropylen-diamin (II)
   In einem 10 Liter Autoklav wurden 6000 Gew.-Teile des nach Beispiel a hergestellten N,N'-Polyoxypropylen-dibenylimins in Gegenwart von 250 Gew.-Teilen Raney-Nickel, das zuvor mit Methanol und Cyclohexan gewaschen worden war, mit Wasserstoff bei einer Temperatur von 130°C und unter einem Druck von 200 bar über einen Zeitraum von 20 Stunden hydriert. Nach der Entspannung des Autoklavs wurde die Reaktionsmischung unter Druck filtriert und anschließend die flüchtigen Bestandteile abgetrennt bei 5 mbar und einer maximalen Sumpftemperatur von 150°C.
   Man erhielt in praktisch quantitativer Ausbeute N,N'-Dibenzyl-polyoxypropylen-diamin.
   Das als Zusatzstoff verwendete Polyoxypropylen-dicyclopentylimin (III) wurde auf folgende Weise hergestellt:
   520 g Polyoxypropylen-diamin mit einem mittleren Molekulargewicht von 230 (Jeffamine® D 230 der Texaco AG) wurden mit 675 g einer Lösung, die bestand aus 425 g Cyclopentanon und 250 g Toluol bei Raumtemperatur gemischt und die erhaltene Reaktionsmischung so lange unter Rückflußkühlung am Wasserabscheider erhitzt, bis sich kein Wasser mehr abschied (Dauer ca. 9 Stunden). Danach wurde das Toluol und überschüssiges Cyclopentanon unter vermindertem Druck bei einer Temperatur von 100 bis 120°C abdestilliert. Man erhielt als Rückstand 810 g Polyoxypropylen-dicyclopentylimin, das ohne weitere Reinigung verwendet wurde.
   Herstellung der Formteile aus Urethan- und Harnstoffgruppen enthaltenden Elastomeren

### Beispiel 2

### Polyoxyalkylen-polyaminkomponente (A-Komponente)

Mischung, die bestand aus
- 66,5 Gew.-Teilen: N,N'-Di-(2-hydroxypropyl)-polyoxypropylendiamin-Mischung nach Beispiel 1
- 30,0 Gew.-Teilen: einer Mischung aus 1-Methyl-3,5-diethylphenylen-diamin-2,4 und 1-Methyl-3,5-diethyl-phenylen-diamin-2,6 im Gew.-Verhältnis 80:20,
- 3,0 Gew.-Teilen: N,N'-Polyoxypropylen-dicyclopentylimin (III) und
- 0,5 Gew.-Teilen: Ölsäure

### Isocyanatkomponente (B-Komponente)

NCO-Gruppen enthaltendes Prepolymer mit einem NCO-Gehalt von 20 Gew.-%, hergestellt durch Umsetzung eines Carbodiimidgruppen enthaltenden 4,4'-Diphenylmethan-diisocyanates mit einem NCO-Gehalt von 29,5 Gew.-% und eines mit Dipropylen-glykol gestarteten Polyoxypropylen-diols mit einer Hydroxylzahl von 56.

Die Polyoxyalkylen-polyamin (A)- und Isocyanat (B)-Komponenten wurden im Mischungsverhältnis A:B=100:96,5 Gew.-Teilen auf einer Hochdruckdosieranlage vom Typ Puromat® 30 der Elastogran Polyurethane GmbH, Geschäftsbereich Maschinenbau gemischt und in ein auf 90°C temperiertes metallisches Formwerkzeug mit den Innenabmessungen 400x200x4 mm eingespritzt. Die Temperatur der A-Komponente betrug 65 und die der B-Komponente 50°C.

Der Fließweg der Reaktionsmischung wurde anhand eines auf 90°C temperierten S-förmigen Fließkanals mit einem Durchmesser von 10 mm bei einer Austragsleistung von 300 g/s und einer Schußzeit von 1 s gemessen.

### Vergleichsbeispiele I und II

Man verfuhr analog den Angaben des Beispiels 2, verwendete jedoch anstelle der erfindungsgemäßen N,N'-Di(2-hydroxypropyl)-polyoxypropylen-diamin-Mischung die vorgenannten Polyoxypropylen-diamin (I) und N,N'-Dibenzyl-polyoxypropylendiamin (II).

### Vergleichsbeispiel I

### Polyoxyalkylen-polyaminkomponente (A-Komponente)

Mischung, die bestand aus
- 66,5 Gew.-Teilen: Polyoxypropylen-diamin ((I), Jeffamine® D 2000)
- 30,0 Gew.-Teilen: einer Mischung aus 1-Methyl-3,5-diethylphenylen-diamin-2,4 und 1-Methyl-3,5-diethyl-phenylen-diamin-2,6 im Gew.-Verhältnis 80:20,
- 3,0 Gew.-Teilen: N,N'-Polyoxypropylen-dicyclopentylimin (III) und
- 0,5 Gew.-Teilen: Ölsäure

### Vergleichsbeispiel II

### Polyoxyalkylen-polyaminkomponente (A-Komponente)

Mischung, die bestand aus
- 66,5 Gew.-Teilen: N,N'-Dibenzyl-polyoxypropylen-diamin (II)
- 30,0 Gew.-Teilen: einer Mischung aus 1-Methyl-3,5-diethylphenylen-diamin-2,4 und 1-Methyl-3,5-diethyl-phenylen-diamin-2,6 im Gew.-Verhältnis 80:20,
- 3,0 Gew.-Teilen: N,N'-Polyoxypropylen-dicyclopentylimin (III) und
- 0,5 Gew.-Teilen: Ölsäure

Tabelle 1 zeigt die verwendeten Mischungsverhältnisse A:B und das Fließverhalten nach der oben beschriebenen Methode bei 90°C sowie die Shorehärte nach 40 s als Maß für das Aushärteverhalten.

**Tabelle 1**

| Bsp. | Vgl. Bsp. | Mischungsverhältnis A:B = 100: | NCO-Index | Fließweg cm | Härte Shore D nach 40 sek. |
|---|---|---|---|---|---|
| 2 | | 96,5 | 110 | 181 | 50 |
| | I | 97,2 | 110 | 168 | 50 |
| | II | 95,3 | 110 | 193 | 47 |

An den eine Stunde bei 160°C getemperten Formteilen wurden folgende mechanische Werte gemessen (Tabelle 2)

**Tabelle 2**

| | | | | |
|---|---|---|---|---|
| Beispiel | | 2 | | |
| Vergleichsbeispiel | | | I | II |
| Rohdichte | DIN 53420 kg/m³ | 1110 | 1098 | 1099 |
| Reißfestigkeit | DIN 53504 N/mm² | 35 | 34 | 37 |
| Reißdehnung | DIN 53504 % | 184 | 190 | 219 |
| Weiterreißfestigkeit | DIN 53515 N/mm² | 33 | 24 | 24 |
| Härte | DIN 53505 Shore D | 69 | 70 | 73 |
| Biege E-Modul | DIN 53457 N/mm² | 658 | 616 | 616 |
| HDT n. ISO 75/B | DIN 53461 °C | 158 | 160 | 158 |

Die aus dem Beispiel 2 und den Vergleichsbeispielen I und II erhaltenen Ergebnisse zeigen, daß vergleichbare mechanische Eigenschaften erreicht werden. Gleichzeitig ist die Fließfähigkeit von Beispiel 2 gegenüber dem Vergleichsbeispiel I deutlich verbessert. Gegenüber Vergleichsbeispiel II besteht der Vorteil in der deutlich vereinfachten und daher kostengünstigen Herstellung der erfindungsgemäß verwendbaren N-propoxylierten Polyoxyalkylen-polyaminen mit mindestens 50 % sekundären Aminogruppen.

Zur Prüfung der Sprödigkeit/Brüchigkeit der Formteile wurden 2 mm starke Prüfplatten angefertigt und während der ersten 30 min nach dem entformen durch Umknicken auf Brüchigkeit getestet. Trat innerhalb dieser Zeitspanne ein Bruch auf, so wurde das Formteil als spröde ("kaltspröde") bezeichnet.

### Beispiel 3

Es wurde analog Beispiel 2 verfahren und auch die Rezeptur analog Beispiel 2 verwendet, wobei jedoch das Mischungsverhältnis A:B auf 100:105,2 erhöht wurde. Das entspricht einem NCO-Index von 120. Auch bei dieser höheren Kennzahl war bei Verwendung des erfindungsgemäßen N-propoxylierten Polyoxypropylen-polyamins keine Sprödigkeit oder Brüchigkeit der Formteile zu beobachten.

### Vergleichsbeispiel III

Man verfuhr analog den Angaben von Vergleichsbeispiel I, wobei jedoch das Mischungsverhältnis A:B auf 100:106,1 erhöht wurde. Das entspricht wiederum einem NCO-Index von 120. Die erhaltene Prüfplatten zerbrachen nach dem Abkühlen (15 min).

### Vergleichsbeispiel IV

Da hier bereits bei dem NCO-Index von 110 (Vergleichsbeispiel II) eine Sprödigkeit zu beobachten war, wurde analog Vergleichsbeispiel II verfahren, jedoch das Mischungsverhältnis A:B auf 100:91,5 gesenkt. Das entspricht einem NCO-Index von 105. Erst bei diesem niedrigen Index, war kein Bruch der Prüfplatten nach dem Abkühlen mehr zu beobachten.

**Tabelle 3**

| Bsp. | Vgl. Bsp. | Mischungsverhältnis A:B = 100: | NCO-Index | Fließweg cm | Härte Shore D nach 40 sek. |
|---|---|---|---|---|---|
| 3 | | 105,2 | 120 | 189 | 47 |
| | II | 106,1 | 120 | 179 | 48 |
| | III | 91,5 | 105 | 191 | 48 |

An den eine Stunde bei 160°C getemperten Formteile wurden folgende mechanische Werte gemessen (Tabelle 4)

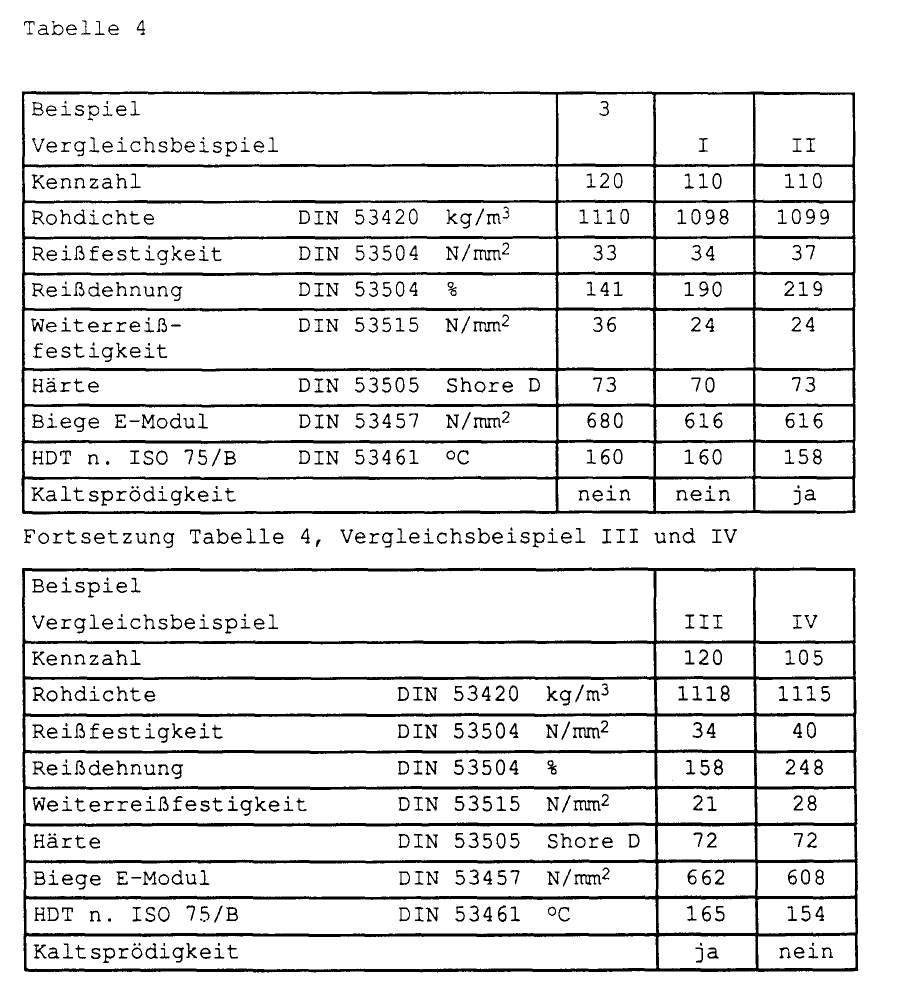

Das Beispiel 3 belegt die größere Verarbeitungsbreite der mit den erfindungsgemäßen N-propoxylierten Polyoxyalkylen-polyaminen mit mindestens 50 % sekundären Aminogruppen hergestellten Formulierungen. Selbst bei einem NCO-Index von 120 ist das Auftreten der für hohe Kennzahlen typischen Sprödigkeit nicht zu beobachten. Primäres Polyoxypropylen-diamin (Vergleichsbeispiel III) führt bei diesem NCO-Index zu spröden Formteilen. Beim N,N'-Dibenzyl-polyoxypropylendiamin ist dies bereits bei einem NCO-Index 110 der Fall, erst bei einem NCO-Index von 105 tritt keine Sprödigkeit auf. Die gemäß Beispiel 3 erhaltenen Formteile zeichnen sich durch ein gleichwertiges bis besseres Fließverhalten, eine gute green strength und ein gutes mechanisches Niveau aus.

### Formteile mit Füllstoffen

### Beispiel 4

### Polyoxyalkylen-polyaminkomponente (A-Komponente)

Mischung, die bestand aus
- 63,5 Gew.-Teilen: N,N'-Di-(2-hydroxypropyl) -polyoxypropylendiamin-Mischung nach Beispiel 1
- 30,0 Gew.-Teilen: einer Mischung aus 1-Methyl-3,5-diethylphenylen-diamin-2,4 und 1-Methyl-3,5-diethyl-phenylen-diamin-2,6 im Gew.-Verhält- nis 80:20,
- 4,1 Gew.-Teilen: N,N'-Polyoxypropylen-dicyclopentylimin (III),
- 1,9 Gew.-Teilen: Zinkstearat und
- 0,5 Gew.-Teilen: Ölsäure

### Isocyanatkomponente (B-Komponente) analog Beispiel 2

In die A-Komponente wurde soviel Füllstoff (gemahlene Glasfaser) eingemischt, daß bei Vermischung der A- und B-Komponente bei Index 110, 20 % Füllstoff im Formteil enthalten waren. Die Formtemperatur betrug 65°C. Im übrigen war die Verfahrensweise analog Beispiel 2.

### Vergleichsbeispiele V und VI

Man verfuhr analog den Angaben des Beispiels 4, verwendete jedoch anstelle der erfindungsgemäßen N,N'-Di(2-hydroxypropyl)-polyoxypropylendiamin-Mischung die vorgenannten Polyoxypropylen-diamin (I) und N,N'-Dibenzyl-polyoxypropylendiamin (II).

### Vergleichsbeispiel V

### Polyoxyalkylen-polyaminkomponente (A-Komponente)

Mischung, die bestand aus
- 63,5 Gew.-Teilen: Polyoxypropylen-diamin ((I), Jeffamine® D 2000),
- 30,0 Gew.-Teilen: einer Mischung aus 1-Methyl-3,5-diethylphenylen-diamin-2,4 und 1-Methyl-3,5-diethyl-phenylen-diamin-2,6 im Gew.-Verhältnis 80:20,
- 4,1 Gew.-Teilen: N,N'-Polyoxypropylen-dicyclopentylimin (III),
- 1,9 Gew.-Teilen: Zinkstearat und
- 0,5 Gew.-Teilen: Ölsäure

### Vergleichsbeispiel VI

### Polyoxyalkylen-polyaminkomponente (A-Komponente)

Mischung, die bestand aus
- 63,5 Gew.-Teilen: N,N'-Dibenzyl-polyoxypropylendiamin (II),
- 30,0 Gew.-Teilen: einer Mischung aus 1-Methyl-3,5-diethylphenylen-diamin-2,4 und 1-Methyl-3,5-diethyl-phenylen-diamin-2,6 im Gew.-Verhältnis 80:20,
- 4,1 Gew.-Teilen: N,N'-Polyoxypropylen-dicyclopentylimin (III),
- 1,9 Gew.-Teilen: Zinkstearat und
- 0,5 Gew.-Teilen: Ölsäure

Tabelle 5 zeigt die verwendeten Mischungsverhältnisse A:B (mit Füllstoff) und das Fließverhalten nach der oben beschriebenen Methode bei 65°C sowie die Shorehärte nach 40 s als Maß für das Aushärteverhalten.

**Tabelle 5**

| Bsp. | Vgl. Bsp. | Mischungsverhältnis A:B = 100: | NCO-Index | Härte Shore D nach 40 sek. |
|---|---|---|---|---|
| 4 | | 64,9 | 110 | 59 |
| | V | 65,4 | 110 | 55 |
| | VI | 64,6 | 110 | 54 |

An den eine Stunde bei 160°C getemperten Formteilen wurden folgende mechanische Werte gemessen (Tabelle 6)

**Tabelle 6**

| | | | | |
|---|---|---|---|---|
| Beispiel | | 4 | | |
| Vergleichsbeispiel | | | V | VI |
| Rohdichte | DIN 53420 kg/m³ | 1245 | 1247 | 1254 |
| Reißfestigkeit | DIN 53504 N/mm² | 24 | 28 | 27 |
| Reißdehnung | DIN 53504 % | 182 | 179 | 162 |
| Weiterreißfestigkeit | DIN 53515 N/mm² | 29 | 32 | 33 |
| Härte | DIN 53505 Shore D | 73 | 75 | 75 |
| Biege E-Modul | DIN 53457 N/mm² | 1570 | 1535 | 1587 |
| HDT n. ISO 75/B | DIN 53461 °C | 162 | 162 | 165 |

Man erhielt Formkörper mit gleich guten mechanischen Eigenschaften und hoher Anfangshärte (gute Entformbarkeit) bei signifikant einfacherer Synthese der erfindungsgemäß verwendbaren N-propoxylierten Polyoxyalkylen-polyamine mit mindestens 50 % sekundären Aminogruppen.

## Patentansprüche

1. Verfahren zur Herstellung von Urethan- und Harnstoffgruppen enthaltenden Elastomeren durch Umsetzung von
a) mindestens einem organischen und/oder modifizierten organischen Polyisocyanat mit
b) mindestens einem sekundären Polyoxyalkylen-polyamin und
c) mindestens einem alkylsubstituierten aromatischen Polyamin mit einem Molekulargewicht bis 500
in Gegenwart oder Abwesenheit von
d) Katalysatoren,
dadurch gekennzeichnet, daß man als sekundäre Polyoxyalkylen-polyamine N-propoxilierte Polyoxyalkylen-polyamine mit mindestens 50 % sekundäre Aminogruppen verwendet, die durch Umsetzung von Polyoxyalkylen-di- und/ oder -triaminen mit mindestens einem Mol 1,2-Propylenoxid pro -NH₂-Gruppe in Abwesenheit von Wasser hergestellt wurden..

2. Verfahren nach Anspruch 1, dadurch gekennzeichnet, daß die N-propoxilierten Polyoxyalkylen-polyamine gebunden enthalten
| | |
|---|---|
| 0 bis 30 % | primäre Aminogruppen, |
| 50 bis 100 % | N-2-Hydroxypropyl-aminogruppen und |
| 0 bis 30 % | N,N-Di(2-hydroxypropyl)-aminogruppen. |

3. Verfahren nach Anspruch 1, dadurch gekennzeichnet, daß man als sekundäre Polyoxyalkylen-polyamine N-propoxilierte Polyoxyalkylen-polyamine mit mindestens 50 % sekundären Aminogruppen verwendet, die hergestellt werden durch Umsetzung von Polyoxyalkylen-di- und/oder -triaminen mit mindestens einem Mol 1,2-Propylenoxid pro -NH₂-Gruppe in Abwesenheit von Wasser und Katalysatoren bei einer Temperatur im Bereich von 90 bis 120°C und einem Druck von 1 bis 8 bar und gegebenenfalls Abtrennung des überschüssigen 1,2-Propylenoxids.

4. Verfahren nach Anspruch 1, dadurch gekennzeichnet, daß man als sekundäre Polyoxyalkylen-polyamine N-propoxilierte Polyoxyalkylen-polyamine mit mindestens 50 % sekundäre Aminogruppen verwendet, die hergestellt werden durch Umsetzung von Polyoxyalkylen-di- und/oder triaminen mit 1,0 bis 1,2 Molen 1,2-Propylenoxid pro -NH₂-Gruppe in Abwesenheit von Wasser und in Gegenwart von Katalysatoren bei einer Temperatur im Bereich von 90 bis 120°C und einem Druck von 1 bis 8 bar.

5. Verfahren nach Anspruch 1, dadurch gekennzeichnet, daß die N-propoxilierten Polyoxyalkylen-polyamine hergestellt werden unter Verwendung von Polyoxyalkylen-di-und/oder -triaminen mit einem Molekulargewicht von 1 000 bis 3 000.

6. Verfahren nach Anspruch 1, dadurch gekennzeichnet, daß man die N-propoxilierten Polyoxyalkylen-polyamine in Verbindung mit Polyoxyalkylen-polyaminen mit 2 bis 4 primären Aminogruppen und Molekulargewichten von 1 000 bis 8 000 verwendet.

7. Verfahren nach Anspruch 1, dadurch gekennzeichnet, daß man die Elastomeren nach dem one shot-Verfahren mit Hilfe der RIM-Technik in einem geschlossenen Formwerkzeug herstellt.

8. Verfahren zur Herstellung von Urethan- und Harnstoffgruppen enthaltenden, zelligen Elastomeren nach Anspruch 1, dadurch gekennzeichnet, daß man die Umsetzung in Gegenwart von
e) Treibmitteln
nach der RIM-Technik und unter Verdichtung in einem geschlossenen Formwerkzeug durchgeführt.

9. Verfahren nach Anspruch 1, dadurch gekennzeichnet, daß man zusätzlich
f) Hilfsmittel und/oder
g) Zusatzstoffe
mitverwendet.

10. Verfahren nach einem der Ansprüche 1 bis 9, dadurch gekennzeichnet, daß man als modifizierte organische Polyisocyanate (a) Polyisocyanatmischungen mit einem NCO-Gehalt von 8 bis 33,6 Gew.-% verwendet, die enthalten:
ai) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 8 bis 33,6 Gew.-% und/oder
aii) ein NCO-Gruppen enthaltendes Prepolymer mit einem NCO-Gehalt von 8 bis 25 Gew.-%, bezogen auf das Prepolymergewicht, hergestellt durch Umsetzung von Polyoxyalkylen-polyolen mit einer Funktionalität von 2 bis 4 und einem Molekulargewicht von 600 bis 6 000 mit 4,4'-Diphenylmethan-diisocyanat oder einer Mischung aus 4,4'- und 2,4'-Diphenylmethandiisocyanaten.

11. Verfahren nach einem der Ansprüche 1 bis 9, dadurch gekennzeichnet, daß man als alkylsubstituierte aromatische Polyamine (c) aromatische Diamine verwendet, die mindestens einen Alkylsubstituenten in ortho-Stellung zu jeder Aminogruppe gebunden enthalten und ausgewählt sind aus der Gruppe von 1,3,5-Triethyl-2,4-phenylen-diamin, 1-Methyl-3,5-diethyl-2,4- und/oder -2,6-phenylendiamin, 3,3'-Dialkyl-4,4'-diamino-diphenylmethane mit 1 bis 4 C-Atomen im Alkylrest und 3,3',5,5'-Tetraalkyl-4,4'-diamino-diphenylmethane mit 1 bis 4 C-Atomen im Alkylrest oder Mischungen aus mindestens zwei der genannten alkylsubstituierten aromatischen Diamine.

## Claims

1. A process for the preparation of elastomers containing urethane and urea groups, by reacting
a) at least one organic and/or modified organic polyisocyanate with
b) at least one secondary polyoxyalkylene-polyamine and
c) at least one alkyl-substituted aromatic polyamine having a molecular weight of up to 500,
in the presence or absence of
d) catalysts,
wherein the secondary polyoxyalkylene-polyamines used are N-propoxylated polyoxyalkylene-polyamines·containing at least 50% of secondary amino groups and prepared by reacting polyoxyalkylene-diamines and/or triamines with at least one mol of 1,2-propylene oxide per -NH₂ group in the absence of water.

2. A process as claimed in claim 1, wherein the N-propoxylated polyoxyalkylene-polyamines contain, in bonded form,
from 0 to 30% of primary amino groups,
from 50 to 100% of N-2-hydroxypropylamino groups and
from 0 to 30% of N,N-di(2-hydroxypropyl)amino groups.

3. A process as claimed in claim 1, wherein the secondary polyoxyalkylene-polyamines used are N-propoxylated polyoxyalkylene-polyamines containing at least 50% of secondary amino groups and prepared by reacting polyoxyalkylene-diamines and/or triamines with at least one mol of 1,2-propylene oxide per -NH₂ group in the absence of water and catalysts at from 90 to 120°C and at from 1 to 8 bar, and, if necessary, removing the excess 1,2-propylene oxide.

4. A process as claimed in claim 1, wherein the secondary polyoxyalkylene-polyamines used are N-propoxylated polyoxyalkylene-polyamines containing at least 50% of secondary amino groups and prepared by reacting polyoxyalkylene-diamines and/or triamines with 1.0 to 1.2 mol of 1,2-propylene oxide per -NH₂ group in the absence of water and in the presence of catalysts at from 90 to 120°C and at from 1 to 8 bar.

5. A process as claimed in claim 1, wherein the N-propoxylated polyoxyalkylene-polyamines are prepared using polyoxyalkylene-diamines and/or triamines having a molecular weight of 1,000 to 3,000.

6. A process as claimed in claim 1, wherein the N-propoxylated polyoxyalkylene-polyamines are used in combination with polyoxyalkylene-polyamines containing 2 to 4 primary amino groups and having molecular weights of from 1,000 to 8,000.

7. A process as claimed in claim 1, wherein the elastomers are prepared by one-shot RIM in a closed mold.

8. A process for the preparation of cellular elastomers containing urethane and urea groups as claimed in claim 1, wherein the reaction is carried out in the presence of
e) blowing agents
by RIM and with compaction in a closed mold.

9. A process as claimed in claim 1, wherein
f) auxiliaries and/or
g) additives
are additionally used.

10. A process as claimed in any one of claims 1 to 9, wherein the modified organic polyisocyanates (a) used are polyisocyanate mixtures having an NCO content of from 8 to 33.6% by weight which contain:
ai) polyisocyanates containing carbodiimide and/or urethane groups and made from 4,4'-diphenylmethane diisocyanate or a mixture of 4,4'- and 2,4'-diphenylmethane diisocyanates and having an NCO content of from 8 to 33.6% by weight, and/or
aii) a prepolymer containing NCO groups and having an NCO content of from 8 to 25% by weight, based on the prepolymer weight, prepared by reacting polyoxyalkylene-polyols having a functionality of from 2 to 4 and a molecular weight of 600 to 6000 with 4,4'-diphenylmethane diisocyanate or a mixture of 4,4'-and 2,4'-diphenylmethane diisocyanates.

11. A process as claimed in any one of claims 1 to 9, wherein the alkyl-substituted aromatic polyamines (c) used are aromatic diamines which contain at least one alkyl substituent bonded in the ortho-position to each amino group and are selected from the group consisting of 1,3,5-triethyl-2,4-phenylenediamine, 1-methyl-3, 5-diethyl-2,4- and/or -2,6-phenylenediamine, 3,3'-dialkyl-4,4'-diaminodiphenylmethanes having 1 to 4 carbon atoms in the alkyl radical, and 3,3',5,5'-tetraalkyl-4,4'-diamino diphenylmethanes having 1 to 4 carbon atoms in the alkyl radical, or mixtures of at least two of said alkyl-substituted aromatic diamines.

## Revendications

1. Procédé de préparation d'élastomères contenant des groupes d'uréthane et d'urée par réaction de
a) au moins un polyisocyanate organique et/ou organique modifié avec
b) au moins une polyoxyalkylène-polyamine secondaire et
c) au moins une polyamine aromatique substituée par des groupes alkyles avec une masse moléculaire jusqu'à 500
en présence ou en absence
d) de catalyseurs,
caractérisé en ce qu'on utilise à titre de polyoxyalkylène-polyamines secondaires des polyoxyalkylène-polyamines N-propoxylées avec au moins 50 % de groupes amino secondaires, qui ont été préparées par réaction de polyoxyalkylène-diamines et/ou -triamines avec au moins une mole d'oxyde de 1,2-propylène par groupe de -NH₂ en absence d'eau.

2. Procédé selon la revendication 1, caractérisé en ce que les polyoxyalkylène-polyamines N-propoxylées contiennent par liaison
0 à 30 % de groupes amino primaires,
50 à100 % de groupes N-2-hydroxypropyl-amino et
0 à 30 % de groupes N,N-di(2-hydroxypropyl)amino.

3. Procédé selon la revendication 1, caractérisé en ce qu'on utilise à titre de polyoxyalkylène-polyamines secondaires des polyoxyalkylène-polyamines N-propoxylées avec au moins 50 % de groupes amino secondaires, qui sont préparées par réaction de polyoxyalkylène-diamines et/ou -triamines avec au moins une mole d'oxyde de 1,2-propylène par groupe de -NH₂ en absence d'eau et de catalyseurs à une température dans la gamme de 90 à 120°C et à une pression de 1 à 8 bars et éventuellement par séparation de l'oxyde de 1,2-propylène en excès.

4. Procédé selon la revendication 1, caractérisé en ce qu'on utilise à titre de polyoxyalkylène-polyamines secondaires des polyoxyalkylène-polyamines N-propoxylées avec au moins 50 % de groupes amino secondaires, qui sont préparées par réaction de polyoxyalkylène-diamines et/ou -triamines avec 1,0 à 1,2 moles d'oxyde de 1,2-propylène par groupe de -NH2 en absence d'eau et en présence de catalyseurs à une température dans la gamme de 90 à 120 °C et à une pression de 1 à 8 bars.

5. Procédé selon la revendication 1, caractérisé en ce que les polyoxyalkylène-polyamines N-propoxylées sont préparées en utilisant des polyoxyalkylène-diamines et/ou -triamines avec une masse moléculaire de 1 000 à 3 000.

6. Procédé selon la revendication 1, caractérisé en ce qu'on utilise les polyoxyalkylène-polyamines N-propoxylées en combinaison avec des polyoxyalkylène-polyamines avec 2 à 4 groupes amino primaires et des masses moléculaires de 1 000 à 8 000.

7. Procédé selon la revendication 1, caractérisé en ce qu'on prépare les élastomères suivant le procédé direct (one shot) à l'aide de la technique RIM dans un outil de formage fermé.

8. Procédé de préparation d'élastomères cellulaires contenant des groupes d'uréthane et d'urée selon la revendication 1, caractérisé en ce qu'on effectue la réaction en présence
e) d'agents d'expansion
suivant la technique RIM et par compression dans un outil de formage fermé.

9. Procédé selon la revendication 1, caractérisé en ce qu'on utilise en outre
f) des adjuvants et/ou
g) des additifs.

10. Procédé selon l'une des revendications 1 à 9, caractérisé en ce qu'on utilise à titre de polyisocyanates organiques modifiés (a) des mélanges de polyisocyanates avec une teneur en NCO de 8 à 33,6 % en poids, qui contiennent :
ai) des polyisocyanates contenant des groupes de carbodiimide et/ou d'uréthane constitués de 4,4'-diphénylméthane-diisocyanate ou d'un mélange de 4,4'- et de 2,4'-diphénylméthane-diisocyanates avec une teneur en NCO de 8 à 33,6 % en poids et/ou
aii) un prépolymère contenant des groupes NCO avec une teneur en NCO de 8 à 25 % en poids, par rapport à la masse de prépolymère, préparé par réaction de polyoxyalkylène-polyols avec une fonctionnalité de 2 à 4 et une masse moléculaire de 600 à 6 000 avec du 4,4'-diphénylméthanediisocyanate ou un mélange de 4,4'- et de 2,4'-diphénylméthanediisocyanates.

11. Procédé selon l'une des revendications 1 à 9, caractérisé en ce qu'on utilise à titre de polyamines aromatiques substituées par des groupes alkyles (c) des diamines aromatiques qui contiennent au moins un substituant alkyle en position ortho par rapport à chaque groupe amino et qui sont choisies parmi le groupe constitué de la 1,3,5-triéthyl-2,4-phénylènediamine, de la 1-méthyl-3,5-diéthyl-2,4- et/ou -2,6-phénylènediamine, des 3,3'-dialkyl-4,4'-diamino-diphénylméthanes avec 1 à 4 atomes de carbone dans le résidu alkyle et des 3,3',5,5'-tétraalkyl-4,4'-diamino-diphénylméthanes avec 1 à 4 atomes de carbone dans le résidu alkyle ou des mélanges d'au moins deux des diamines aromatiques, substituées par des groupes alkyles, citées.
